## Europäisches Patentamt
## European Patent Office
## Office européen des brevets

(19)

(11) Veröffentlichungsnummer: **0 006 533**
**B1**

(12) ## EUROPÄISCHE PATENTSCHRIFT

(45) Veröffentlichungstag der Patentschrift:
**12.05.82**

(51) Int. Cl.³: **B 62 B 3/02**

(21) Anmeldenummer: **79101918.5**

(22) Anmeldetag: **13.06.79**

(54) **Lasttransportwagen.**

(30) Priorität: **28.06.78 DE 2828255**

(43) Veröffentlichungstag der Anmeldung:
**09.01.80 Patentblatt 80/1**

(45) Bekanntmachung des Hinweises auf die Patenterteilung:
**12.05.82 Patentblatt 82/19**

(84) Benannte Vertragsstaaten:
**AT BE CH FR GB IT LU NL SE**

(56) Entgegenhaltungen:
**DE-A-2 033 855**
**DE-A-2 527 199**
**DE-A-2 635 238**
**DE-A-2 651 039**
**DE-A-2 732 757**

(73) Patentinhaber: **Fels, Karl, Albert-Stolte-Strasse 35,
D-4290 Bocholt-Suderwick (DE)**

(72) Erfinder: **Fels, Karl, Albert-Stolte-Strasse 35,
D-4290 Bocholt-Suderwick (DE)**

(74) Vertreter: **Cohausz, Werner, Dipl.-Ing. et al,
Schumannstrasse 97, D-4000 Düsseldorf (DE)**

Lasttransportwagen

Die Erfindung betrifft einen Lasttransportwagen, der insbesondere von einem Kraftfahrzeug aufgenommen wird, mit in zwei Ebenen übereinander angeordneten Laufradsätze, von denen ein in Fahrtrichtung vorderes Laufradpaar des oberen Laufradsatzes am Wagenrahmen gelagert ist und von denen die Laufräder des unteren Laufradsatzes über verschwenkbare und in aufrechter Stellung arretierbare Beinpaare am Wagenrahmen angelenkt und bei gelöster Arretierung mit den Beinen derart hochschwenkbar sind, daß die Laufräder des oberen Laufradsatzes den Lasttransportwagen tragen, wobei den Beinpaaren voneinander unabhängig betätigbare Arretierungen zugeordnet sind, und jedem Beinpaar zur Lösung seiner Arretierung ein auf die obere Ebene auflaufendes Fühlerrad vorgeordnet ist.

Ein derartiger Lasttransportwagen ist aus der DE-A-2 651 039 bekannt. Bei diesem bekannten Wagen werden die Beine im heruntergeklappten Zustand durch ein einseitiges Formgesperre arretiert, dessen Sperre in eine Spitzverzahnung einrastet, die um die Anlenkstelle des Beines angebracht ist. Wird ein derartiger Lasttransportwagen von der Ladefläche eines Kraftfahrzeugs heruntergefahren, so klappen zwar die Beine nach Verlassen der Ladefläche nach unten, aber nicht immer vollständig bis in die Endlage, sondern in eine mittlere Schräglage, da das Kraftfahrzeug häufig aufgrund des Gewichtes der Ladung tiefer liegt und dadurch das am Beinende befindliche Laufrad den Boden zu früh erreicht. In dieser Schräglage des Beines erreichte die Arretierungsvorrichtung des bekannten Lasttransportwagens auch schon eine Feststellung des Beines, aber sie wurde oft so hoch beansprucht, daß Teile brachen.

Aus der DE-A-2 033 855 ist es bekannt zur Fixierung der Beine eines Lasttransportwagens arretierbare Streben zu benutzen. Diese Streben sind aber nur durch Handbetätigung entsperrbar.

Aufgabe der Erfindung ist es, einen Lasttransportwagen der eingangs genannten Art derart zu verbessern, daß neben einer einfacheren Herstellung die Arretiervorrichtung sicherer arbeitet und größere Kräfte, insbesondere in der Schrägstellung des Beines, aufnehmen kann.

Diese Aufgabe wird erfindungsgemäß dadurch gelöst, daß die Fühlerräder oben an den Beinen angeordnet und als Auflauräder ausgebildet sind, die die Beine beim Auffahren auf eine dem oberen Laufradsatz zugeordnete obere Ebene hochschwenken und in der hochgeschwenkten Stellung der Beine den Lasttransportwagen tragen, und daß zur Arretierung an jedem Bein in Höhe oder unterhalb des Fühlerrades eine in der Länge veränderbare Strebe angelenkt ist, deren anderes Ende am Wagenrahmen angelenkt und deren Längenänderung in einer Richtung arretierbar ist, in der die Strebe verkürzt wird, und daß zumindest ein Fühlerrad gegenüber dem Bein gegen Federdruck zum Wagenende hin in einem die Arretierung der Strebe lösenden Sinn beschränkt beweglich ist.

Die in der Länge veränderbare Strebe greift in einem größeren Abstand von der Anlenkstelle des Beines an, so daß erheblich größere Kräfte, insbesondere in der schrägen Stellung des Beines, aufgenommen werden können. Darüber hinaus wird eine sehr einfache und sicher arbeitende Konstruktion erreicht, da die Fühlerräder gleichzeitig als Auflauräder ausgebildet sind und die Arretierungsvorrichtung direkt betätigen können.

Vorzugsweise wird vorgeschlagen, daß für eine beschränkte Beweglichkeit des Fühlerrades gegenüber dem Bein eine Schwinge angelenkt ist, an der das Fühlerrad gelagert ist.

In einem konstruktiv einfachen und sicher arbeitenden Ausführungsbeispiel kann die Strebe von einem mechanischen Festgesperre gebildet sein, wobei ein Ende der Strebe von einer Stange gebildet wird, die gegenüber einem die zweite Anlenkstelle bildenden Teil der Strebe längsbeweglich ist und durch einen Sperrer eines Reibrichtgesperres in einer Bewegungsrichtung lösbar festklemmbar ist. Dabei kann die Strebe ein zur Stange paralleles Übertragungsteil aufweisen, das durch die Schwinge betätigbar ist und den Sperrer in die gelöste Stellung drückt. Ferner wird vorgeschlagen, daß der Sperrer eine kippbare Platte mit einer Öffnung ist, durch die die Stange verläuft.

In einem alternativen Ausführungsbeispiel kann aber auch die Strebe von einer Kolben-Zylinder-Einheit gebildet sein, deren Kolbenstange durch ein Rückschlagventil in einer Bewegungsrichtung sperrbar ist. Hierdurch wird nicht nur eine hohe Sicherheit, sondern auch eine äußerlich ansprechende Konstruktion erreicht. Dabei kann die Kolben-Zylinder-Einheit ein Übertragungsteil aufweisen, das durch die Schwinge betätigbar ist und das Rückschlagventil oder ein Ventil in einer Bypass-Leitung zum Rückschlagventil in die geöffnete Stellung drückt.

Damit die hinteren Beine des Lasttransportwagens in der hochgeklappten Stellung nicht oder nur wenig über den Wagen hinausragen, wird vorgeschlagen, daß das Bein um eine Achse schwenkbar ist, die gegenüber der Beinlängsachse seitlich versetzt angeordnet ist.

Zwei Ausführungsbeispiele der Erfindung sind in den Zeichnungen dargestellt und werden im folgenden näher beschrieben. Es zeigt

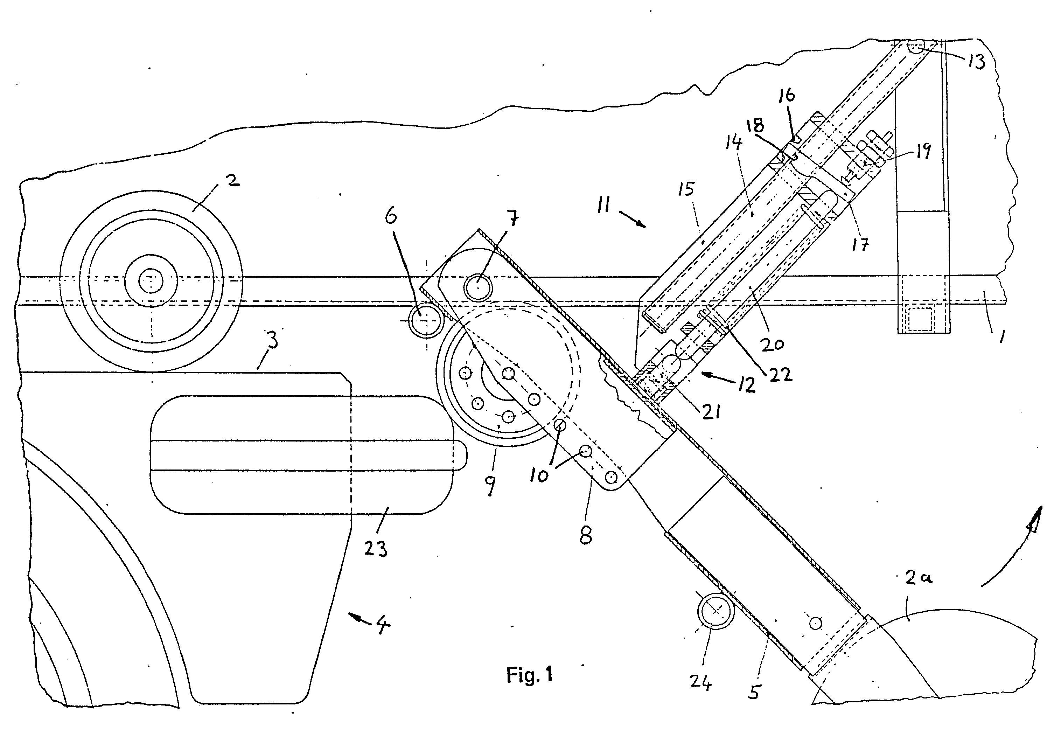

Fig. 1 einen Ausschnitt aus einer seitlichen Ansicht eines Lasttransportwagens mit einer Strebe mit mechanischem Festgesperre und

Fig. 2 eine hydraulisch sperrende Strebe.

Am Rahmen 1 eines Lasttransportwagens sind Laufräder 2 eines oberen Laufradsatzes gelagert, die über die Unterseite des Wagens vorstehen und dann den Wagen abstützen, wenn dieser sich auf der Ladefläche 3 eines Kraftfahrzeugs 4 befindet. Am Rahmen 1 sind ferner Beine 5 um eine waagerechte, zur Wagenlängsachse rechtwinklig angeordnete Achse 6 angelenkt, wobei die Achse seitlich am Hohlprofil des Beins 5 befestigt ist, so daß zwischen der Längsachse des Beines 5 und der Achse 6 ein Abstand besteht, der etwa der halben Breite des Beines entspricht.

An dem oberen Ende des Beines 5 ist um eine zur Achse 6 parallele Achse 7 eine Schwinge 8 angelenkt, die in einem Abstand von der Achse 7 ein Fühlerrad 9 trägt, so daß das Fühlerrad um die Achse 7 schwenkbar ist. Das Fühlerrad 9 kann an der Schwinge 8 in verschiedenen Abständen zur Achse 7 in Bohrungen 10 befestigt werden, um das Fühlerrad 9 an die Gegebenheiten des jeweiligen Kraftfahrzeuges anpassen zu können.

In einem Abstand von der Achse 7, der etwa einem Drittel des Abstandes der Achse 7 von der Achse des Laufrades 2a entspricht, ist eine Strebe 11 in einer Anlenkstelle 12 mit einem Ende befestigt, deren anderes Ende an einer Stelle 13 angelenkt ist. Die Strebe 11 weist eine Stange 14 auf, die mit einem Ende der Anlenkstelle 13 gebildet und in einem Gehäuse 15 der Strebe 11 geführt ist, das auf der der Einführseite der Stange 14 gegenüberliegenden Seite die Anlenkstelle 12 formt.

In dem Gehäuse 15 befindet sich eine um eine Lagerstelle 16 kippbare Platte 17, durch deren Öffnung 18 die zylindrische Stange 14 geführt ist, an deren Mantelfläche der Öffnungsrand der Platte 17 sich festklemmt, wenn die Stange 14 in das Gehäuse 15 eingeschoben wird. Die Platte 17 ist durch ein federndes Widerlager 19 gehalten, und dem Widerlager 19 gegenüber gelangt ein stangenförmiges Übertragungsteil 20 an der Platte 17 zur Anlage, das parallel zur Stange 14 im Gehäuse geführt ist und auf der der Platte 17 gegenüberliegenden Seite an einem Bolzen 21 durch eine Feder 22 gedrückt wird.

Die Anlagefläche des Bolzens 21 für das Übertragungsteil 20 ist zylindrisch ausgeführt und koaxial zur Anlenkstelle 12, so daß auch bei verschiedenen Winkellagen der Strebe 11 gegenüber dem Bein 5 der Bolzen 21 eine Längsbewegung auf das Teil 20 übertragen kann. Der am Bein 5 rechtwinklig zur Beinlängsachse verschieblich befestigte Bolzen 21 ist in einer Richtung von der Strebe weg federbelastet und liegt mit seinem dem Teil 20 gegenüberliegenden Ende an der Schwinge 8 an, so daß eine Bewegung der Schwinge 8 zur Strebe hin und gegen den Druck der Federn des Bolzens und des Teils 20 die Platte 17 in eine entsperrte Lage drückt.

Wenn der Lasttransportwagen in das Kraftfahrzeug 4 eingeschoben werden soll, werden zuerst die Laufräder 2 auf die Ladefläche 3 abgesetzt und der Wagen eingeschoben, wobei vorstehende Teile des Kraftfahrzeugs 4, insbesondere die Stoßstange 23, das Fühlerrad 9 nach hinten drücken, damit die Schwinge 8 und die Platte 17 betätigen, so daß das Reibrichtgesperre entsperrt wird und die Strebe verkürzend zusammenfahrbar ist. Daduch führt ein weiterhin anhaltender Druck gegen das Fühlerrad 9 zu einem Hochschwenken des Beins 5 in eine waagerechte Lage, und der Wagen kann weiter in das Kraftfahrzeug eingeschoben werden, so daß das Laufrad 2a zur Anlage auf der Ladefläche 3 gelangt. Die Beine 5 sind durch ein waagerechtes Rohr 24 miteinander verbunden, das in der waagerechten Lage des Beins 5 an der Unterseite des Rahmens 1 anliegt.

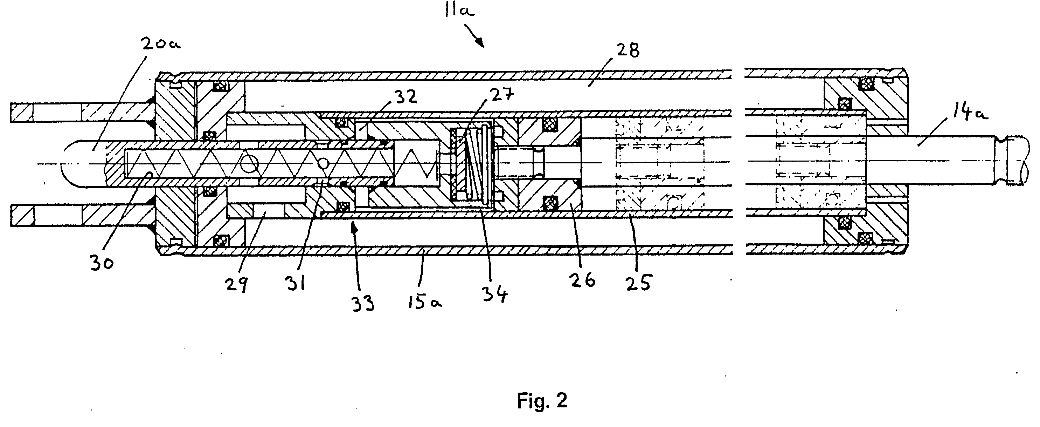

Anstelle einer mechanischen Arretier- und Sperrvorrichtung kann auch eine hydraulische Strebe verwendet werden, wie sie in Fig. 2 gezeigt ist. Anstelle des Gehäuses 15 ist ein äußerer Zylinder 15a am Bein 5 angelenkt, und an der gegenüberliegenden Seite des Zylinders 15a ist eine koaxiale Kolbenstange 14a herausgeführt, die an der Anlenkstelle 13 befestigt ist. Im Zylinder 15a befindet sich koaxial ein innerer Zylinder 25, in dem ein mit der Kolbenstange 14a verbundener Kolben 26 gleitet. Der Zufluß von Öl zu dem Zylinderraum des inneren Zylinders 25, der nicht von der Kolbenstange 14a durchdrungen ist, wird durch ein Rückschlagventil 27 mit einer Ventilplatte derart gesteuert, daß Öl in diesen Zylinderraum ein-, aber nicht herausfließen kann, so daß Kolbenstange aus der Einheit herausgezogen, aber nicht hineingedrückt werden kann. Während eines Einströmens von Öl in diese Zylinderkammer fließt es aus dem Ringraum 28 zwischen dem inneren und äußeren Zylinder durch eine Öffnung 29, eine Sackbohrung 30 des stangenförmigen, nach außen hin federbeaufschlagten Übertragungsteils 20a und durch das federbeaufschlagte Rückschlagventil 27. In dem Ringraum 28 befindet sich ein Luftkissen, das auf das Öl einen Druck ausübt, der dafür sorgt, daß die Kolbenstange 14a nach außen bewegt wird, wodurch die Strebe ein Absenken des Beins 5 bewirkt. Ein Aufbau dieses Luftdrucks wird durch ein Hochschwenken des Beins 5 erzeugt.

Um die durch das Rückschlagventil 27 erzeugte arretierte Stellung der Strebe aufheben zu können, ist das Teil 20a vorgesehen, das am inneren Ende radiale Bohrungen 31 aufweist, die mit fluchtenden axialen Bohrungen 32 im Inneren des Zylinders 25 ein Ventil 33 bilden, durch das eine das Ventil 27 überbrückende Bypassleitung 34 im eingedrückten Zustand des nach außen hin federbeaufschlagten Übertragungsteils 20a geöffnet wird. Damit erzeugt ein Eindrücken des Teils 20a in die Zylinder-Kolben-Einheit hinein eine Verbindung des Kolbenraums mit dem Ringraum 28 an dem Ventil 27 vorbei über den mit dem Kolbenraum verbundenen Bypass 34 und die Bohrungen 29 bis 32.

## Patentansprüche

1. Lasttransportwagen, der insbesondere von einem Kraftfahrzeug aufgenommen wird, mit in zwei Ebenen übereinander angeordneten Laufradsätzen, von denen ein in Fahrtrichtung vorderes Laufradpaar (2) des oberen Laufradsatzes am Wagenrahmen (1) gelagert ist und von denen die Laufräder (2a) des unteren Laufradsatzes über verschwenkbare und in aufrechter Stellung arretierbare Beinpaare (5) am Wagenrahmen angelenkt und bei gelöster Arretierung mit den Beinen derart hochschwenkbar sind, daß die Laufräder (2) des oberen Laufradsatzes den Lasttransportwagen tragen, wobei den Beinpaaren voneinander unabhängig betätigbare Arretierungen (11) zugeordnet sind und jedem Beinpaar (5) zur Lösung seiner Arretierung ein auf die obere Ebene auflaufendes Fühlerrad (9) vorgeordnet ist, dadurch gekennzeichnet, daß die Fühlerräder (9) oben an den Beinen (5) angeordnet und als Auflaufräder ausgebildet sind, die die Beine beim Auffahren auf eine dem oberen Laufradsatz zugeordnete obere Ebene hochschwenken und in der hochgeschwenkten Stellung der Beine den Lasttransportwagen tragen, daß zur Arretierung an jedem Bein (5) in Höhe oder unterhalb des Fühlerrades (9) eine in der Länge veränderbare Strebe (11) angelenkt ist, deren anderes Ende am Wagenrahmen (1) angelenkt und deren Längenänderung in einer Richtung arretierbar ist, in der die Strebe verkürzt wird, und daß zumindest ein Fühlerrad (9) gegenüber dem Bein (5) gegen Federdruck zum Wagenende hin in einem die Arretierung der Strebe (11) lösenden Sinn beschränkt beweglich ist.

2. Lasttransportwagen nach Anspruch 1, dadurch gekennzeichnet, daß für eine beschränkte Beweglichkeit des Fühlerrades (9) gegenüber dem Bein (5) eine Schwinge (8) angelenkt ist, an der das Fühlerrad gelagert ist.

3. Lasttransportwagen nach Anspruch 1 oder 2, dadurch gekennzeichnet, daß ein Ende der Strebe (11) von einer Stange (14) gebildet wird, die gegenüber einem die zweite Anlenkstelle (12) bildenden Teil (15) der Strebe längsbeweglich ist und durch einen Sperrer (17) eines Reibrichtgesperres in einer Bewegungsrichtung lösbar festklemmbar ist.

4. Lasttransportwagen nach Anspruch 3, dadurch gekennzeichnet, daß die Strebe (11) ein zur Stange (14) paralleles Übertragungsteil (20) aufweist, das durch die Schwinge (8) betätigbar ist und den Sperrer (17) in die gelöste Stellung drückt.

5. Lasttransportwagen nach Anspruch 3 oder 4, dadurch gekennzeichnet, daß der Sperrer (17) eine kippbare Platte mit einer Öffnung (18) ist, durch die die Stange (14) verläuft.

6. Lasttransportwagen nach Anspruch 1 oder 2, dadurch gekennzeichnet, daß die Strebe (11) von einer Kolben-Zylinder-Einheit gebildet ist, deren Kolbenstange (14a) durch ein Rückschlagventil (27) in einer Bewegungsrichtung sperrbar ist.

7. Lasttransportwagen nach Anspruch 6, dadurch gekennzeichnet, daß die Kolben-Zylinder-Einheit ein Übertragungsteil (20a) aufweist, das durch die Schwinge (8) betätigbar ist und das Rückschlagventil (27) oder ein Ventil (33) in einer Bypass-Leitung (34) zum Rückschlagventil in die geöffnete Stellung drückt.

8. Lasttransportwagen nach einem der Ansprüche 1 bis 7, dadurch gekennzeichnet, daß das Bein (5) um eine Achse (6) schwenkbar ist, die gegenüber der Beinlängsachse seitlich versetzt angeordnet ist.

## Claims

1. A load-transporter truck, which is particularly adapted to be taken up by a motor vehicle, having sets of road wheels arranged in two planes disposed one above the other, of which a front pair of road wheels (2) of the upper set with respect to the driving direction are mounted on the truck chassis (1), and the road wheels (2a) of the lower set are articulated to the vehicle chassis by swivelling leng pairs (5) which are locable in an upright position and on release of the lock are raised with the legs in such a manner that the road wheels (2) of the upper set support the load-transporter truck, the leg pairs being provided with independently operable locking means (11) and each leg pair (5) has arranged in front thereof a feeler wheel (9) which rises into the upper plane upon release of the lock, characterised in that the feeler wheels (9) are arranged at the top of the legs (5) and are constructed as ramp-mounting cam wheels which, on mounting an upper plane associated with the upper wheel set, swing the legs upwardly and support the load transporter truck when the legs are in their raised position, a locking strut (11) of adjustable length is hinged to each leg (5) level with or below the feeler wheel (9) and has its other end hinged to the truck chassis (1), the length adjustement of the strut being lockable in a direction in which the strut is shortened, and at least one feeler wheel has a limited amount of movability relative to the associated leg (5) in opposition to spring loading towards the truck end in the sense of releasing the strut lock (11).

2. A load-transporter truck according to claim 1, characterised in that the feeler wheel (9) is mounted on a hinged rocker link (8) for limited movability of the feeler wheel relative to the leg (5).

3. A load-transporter truck according to claim 1 or 2, characterised in that one end of the strut (11) consists of a rod (14) which is longitudinally displaceable relative to the strut part (15) which provides the second hinge point (12) and is adapted to be releasably clamped fast in one direktion of displacement by means of the locking member (17) of a directional friction clamp.

4. A load-transporter truck according to claim 3, characterised in that the strut (11) comprises a transmission element (20) which extends parallel to the rod (14) and is adapted to be actuated by the rocker link (8) in order to push the locking member (17) into the release position.

5. A load-transporter truck according to claim 3 or 4, characterised in that the locking member (17) is a tiltable plate with a hole (18) through which the rod (14) passes.

6. A load-transporter truck according to claim 1 or 2, characterised in that the strut (11) is a piston-and-cylinder unit, of which the piston rod (14a) is adapted to be locked in one direction of displacement by means of a non-return valve (27).

7. A load-transporter truck according to claim 6, characterised in that the piston-and-cylinder unit comprises a transmission element (20a) which is actuable by the rocker link (8) and forces the non-return valve (27), or a valve in a bypass-line (34) to said non-return valve, into the open position.

8. A load-transporter truck according to any one of claims 1 to 7, characterised in that the leg (5) is pivotable about an axis (6) which is laterally offset relative to the longitudinal leg axis.

**Revendications**

1. Remorque de transport qui est en particulier attelée à un véhicule automobile, comportant des séries de roues mobiles disposées les unes au-dessus des autres dans deux plans, une paire de roues mobiles (2) de la série supérieure de roues mobiles disposées à l'avant dans le sens de déplacement étant montées sur le chassis (1) de la remorque, les roues mobiles (2a) de la série de roues mobiles inférieures étant articulees sur le chassis de la remorque au moyen de paires de bras pivotants (5) pouvant . être bloquées en position debout et, après déblocage, pouvant pivoter vers le haut avec les bras de sorte que les roues mobiles de la série supérieure de roues mobiles portent la remorque de transport, des organes de blocage (11) pouvant être actionnés indépendamment les uns des autres étant prévus pour chaque paire de bras (5), une roue palpeuse (9) courant sur le plan supérieur étant prévue pour chaque paire de bras pour son déblocage, remorque de transport caractérisée par le fait que les roues palpeuses (9) sont disposées en haut sur les bras (5) et sont constituées par des roues de relevage qui, en montée, font basculer les bras vers le haut dans un plan supérieur associé à la série supérieure de roues mobiles et portent, en position basculée ves le haut, les bras de la remorque de transport, une entretoise à longueur variable (11) étant articulée à chaque bras (5) en hauteur ou en-dessous de la roue palpeuse (9) pour le blocage, l'autre extrémité de ladite entretoise (11) étant articulée au chassis (1) de la remorque, la variation de longueur de l'entretoise (11) pouvant être bloquée dans la direction de raccourcissement de l'entretoise, et au moins une roue palpeuse (9) étant mobile par rapport au bras (5) en direction de l'extrémité de la remorque contre la pression d'un ressort dans le sens d'un déblocage de l'entretoise (11).

2. Remorque de transport selon la revendication 1, caractérisée par le fait qu'une manivelle oscillante (8), sur laquelle est montée la roue palpeuse (9), est articulée par rapport au bras (5) pour un déplacement limité de la roue palpeuse (9).

3. Remorque de transport selon l'une des revendications 1 et 2, caractérisée par le ait qu'une extrémité de l'entretoise (11) est constituée par une tige (14) mobile longitudinalement par rapport à une pièce (15) formant le second point d'articulation (12), ladite tige (14) pouvant être bloquée de manière libérable dans une direction de déplacement par un arrêt (17) d'un cliquet à friction.

4. Remorque de transport selon la revendication 3, caractérisée par le fait que l'entretoise (11) présente une partie de transfert (20) parallèle à la tige (14) qui peut être actionnée par la manivelle oscillante (8) et comprime l'arrêt (17) en position débloquée.

5. Remorque de transport selon l'une des revendications 3 et 4, caractérisée par le fait que l'arrêt (17) est constitué par une plaque basculante munie d'une ouverture (18) que traverse la tige (14).

6. Remorque de transport selon l'une des revendications 1 et 2, caractérisée par le fait que l'entretoise (11) est constituée par un vérin dont la tige de piston (14a) peut être bloquée dans une direction de déplacement par un clapet anti-retour (27).

7. Remorque de transport selon la revendication 6, caractérisée par le fait que le vérin comporte une partie de transfert (20a) pouvant être actionnée par la manivelle oscillante (8) et qui comprime le clapet anti-retour (27) ou un clapet (3) dans un circuit by-pass (34) menant au clapet anti-retour en position ouverte.

8. Remorque de transport selon l'une des revendications 1 à 7, caractérisée par le fait que le bras (5) est pivotant autour d'un axe (6) qui est décalé latéralement par rapport à l'axe longitudinal du bras.

Fig. 1

0 006 533

Fig. 2